(19) Europäisches Patentamt
European Patent Office
Office européen des brevets

(11) **EP 0 420 440 B1**

(12) **EUROPEAN PATENT SPECIFICATION**

(45) Date of publication and mention
of the grant of the patent:
**04.11.1998  Bulletin 1998/45**

(51) Int Cl.6: **G11B 5/596**

(21) Application number: **90309910.9**

(22) Date of filing: **11.09.1990**

(54) **A method of and system for demodulating position information signals provided by a transducer**

Verfahren und System zur Demodulation von Lagesignalen eines Transducers

Méthode et système pour démoduler les signaux de position d'un transducteur

(84) Designated Contracting States:
**DE FR GB IT NL**

(30) Priority: **29.09.1989  US 415053**

(43) Date of publication of application:
**03.04.1991  Bulletin 1991/14**

(73) Proprietor: **SEAGATE TECHNOLOGY INTERNATIONAL**
**Georgetown, Grand Cayman Island (KY)**

(72) Inventors:
• **Weispfenning, Gerald Lee**
**Minneapolis, Minnesota 55407 (US)**
• **Goss, Lloyd Chambers**
**Bloomington, Minnesota 55438 (US)**

(74) Representative: **Kenyon, Sarah Elizabeth et al**
**Miller Sturt Kenyon**
**9 John Street**
**London WC1N 2ES (GB)**

(56) References cited:
**EP-A- 94 314**       **EP-A- 159 841**
**US-A- 4 590 526**

**Description**

This invention relates to demodulation of position information signals provided by a transducer in response to position information read from the disk.

Disk file data storage systems contain one or more magnetic disks on which data is stored in concentric tracks. A transducer writes, or magnetically encodes, the data on the track. The transducer is also capable of reading the magnetically encoded data from the tracks.

An electro-mechanical actuator operates within a negative feed back, closed loop servo system. The actuator moves the transducer radially for track seek operations and holds the transducer directly over a track for track following operations.

A servo transducer reads position information from the disk and provides a position signal which is decoded by a position demodulator and presented in digital form to a servo control micro-processor. The servo control micro-processor essentially compares actual radial position of the transducer over the disk with desired position and commands the actuator to move in order to minimise position error.

In one type of servo system, one disk surface is dedicated to contain servo tracks which are encoded with servo position information. The servo position information in the servo tracks is condensed to evenly spaced sectors. A servo transducer flies over the servo sectors as the disk rotates and produces a sampling effect. The actual position transducer information is up-dated at the end of each servo sector through the use of track identification information and position error information. The track identification number is pre-written into each servo sector and serves as coarse transducer position information. The position error information is written in the servo sector and represents the distance that the servo transducer is located from the centre of the track. This position error information serves as fine transducer position information. One example of such a position control system using servo sectors is disclosed in EP-A-094314, where high frequency bursts are recorded on either side of the track centre line. The amplitude of the output of the read head is used to determine the displacement of the head from the track centreline and so to provide a transducer position control signal. While useful in relatively low density drive applications, this approach has shortcomings in higher density drives, where the demands on positioning accuracy are considerably higher.

In a more sophisticated approach such as that disclosed in US A-4,590,562, the position error information is written in two fields, referred to respectively as the quadrature field and the normal field. Position error information obtained from the normal field or the quadrature field is called a normal or quadrature position sample. By decoding the position samples obtained from these two fields, the off track position of the transducer is determined relative to the centre of the track. The position samples are typically decoded by sampling the analog position signal provided by the transducer which represents the position error information magnetically encoded on the disk. The sampled signal is then converted to a digital signal representing transducer position error.

A further approach is disclosed in EP-A-0159841 in which position information from a disk is amplified and rectified before being integrated to provide a position error signal which is used to calculate position error. The preamble of claim 1 is based on this document.

In the past, two separate, theoretically identical, capacitors were used for integrating signals representing the normal and quadrature position samples. However, although the capacitors were theoretically identical, some difference between the capacitance values often existed. This difference produced an error factor between the normal and quadrature samples. Further, since two capacitors were used for integration in some cases, two analog-to-digital (A/D) converters were required to convert the final analog voltage across each of the capacitors. Using two A/D convertors not only increased the cost of the demodulator, but introduced additional errors due to various off-sets in the A/D converters.

Additionally, in the past, the position samples decoded from the quadrature and normal fields were combined in the analog domain to produce a composite position error signal. This technique increased inaccuracies in the demodulator. These inaccuracies were due to the analog circuits which each had associated off-set errors, gain errors, linearity errors and variation with temperature and which were used for combining the position samples.

Further, before integrating the transducer position signal, and between integrations, it is desirable to keep the initial voltage on the integrating capacitors as close to a zero error level as possible.

For these reasons, there is a need for a more accurate servo position demodulator with a null system which compensates for static or time variable DC off-sets in the electronics surrounding the capacitor.

According to the present invention there is provided a demodulating system for demodulating position information signals provided by a transducer in response to position information read from a disk in a data storage system, the system comprising: amplifier means, coupled to the transducer, for amplifying the position information signals to provide amplified position signals; rectifier means, coupled to the amplifier means, for rectifying the amplified position signals to provide rectified position signals; first integrating means, selectively coupled to the rectifier means for integrating the rectified position signals to produce position error signals; an analog-to-digital A/D converter coupled to the first integrating means, for converting the position error signals into logic output signals representative of the position error signals; and nulling means, selectively coupled to the first integrating means, for providing the first integrating means with a reference signal to initialise the first integrating means; characterised in that the A/D converter is time multiplexed between use in controlling the nulling means to initialize the first integrating means and converting the position error signals into the logic output signals.

According to a further aspect of the present invention, there is provided a method of demodulating position information signals provided by a transducer in response to position information read from a disk in a data storage system, the method comprising: amplifying the position information signals to provide amplified position signals; rectifying the amplified position signals to provide rectified position signals; providing integrating means for integrating the rectified position signals to produce position error signals; providing an analog-to-digital A/D converter for converting the position error signals into logic output signals representative of the position error signals; and selectively coupling nulling means to the integrating means for providing the integrating means with a reference signal to initialise the integrating means; characterised in that the A/D converter is time multiplexed between use in controlling the nulling means to initialize the integrating means and converting the position error signals into logic output signals.

The invention is illustrated, merely by way of example, in the accompanying drawings, in which:-

Figure 1 is a block diagram of one embodiment of a demodulating system according to the present invention;
Figure 2 is a view of a disk surface used in a sectored servo system;
Figure 3A is an enlarged view of a portion of a servo sector of the disk shown in Figure 2;
Figure 3B is a diagram of the format of servo information in one servo sector of Figure 3A;
Figure 4A shows a transducer output signal amplitude as a function of track radius for one servo sector;
Figure 4B shows the relationship between the transducer and magnetised areas on the disk;
Figure 5 is a diagram used to describe mathematically the amplitude of the transducer output signal as a linear function of the distance of the transducer centre from the track centre;
Figure 6 is a detailed block diagram of a servo position demodulator;
Figure 7 is a timing diagram showing PES capacitor voltage during one servo sector;
Figure 8 is a timing diagram showing the relationship between events in the servo position demodulator of Figure 6;
Figure 9A is a graph showing the output of a multiplier of the servo position demodulator of Figure 6 as a function of track radius;
Figure 9B is a diagram showing magnetised bits in a servo sector and the position of the transducer which corresponds to the positions in Figure 9A;
Figure 10 is a diagram which illustrates the relationship between the final voltage on the PES capacitor and the off track error of the transducer;
Figure 11 is a graph of an analog voltage PES1 versus track radius of the transducer in one servo sector;
Figure 12A is a more detailed block diagram of a DC null loop;
Figure 12B is a timing diagram showing the relationship between key signals in the DC null loop of Figure 12A;
Figure 13A shows the concept of a total position word;
Figure 13B is a diagram showing PES voltages and the least significant bit of the raw track identification number as a function of transducer position;
Figure 13C is a truth table giving the correction number for each case shown in Figure 13A;
Figure 13D is a block diagram of a track identification correction feature;
Figure 13E shows one implementation of the track identification correction feature;
Figure 14A shows track crossing plots for the PES fields in a servo on-data-system;
Figure 14B shows the relationship between the transducer position in the servo sector and the track crossing plots;
Figure 14C shows the position of the transducer over one track in the servo sector;
Figure 15A shows transducer trajectory over a servo sector caused by radial movement of the transducer as the disk rotates;
Figure 15B is a plot showing the effect of radial velocity of the transducer on the PES track crossing plots;
Figure 15C shows the corrected PES track crossing plots after being compensated for radial velocity of the transducer;
Figure 16A shows the track crossing plots for the PES fields in a dedicated servo system;
Figure 16B shows the relationship between the transducer position in the servo sector and the track crossing plots;
Figure 16C shows the position of the transducer over one track in the servo sector;
Figure 17 shows a servo system having multiple independent actuators; and
Figure 18 shows a top view of a disk in the servo system shown in Figure 17.

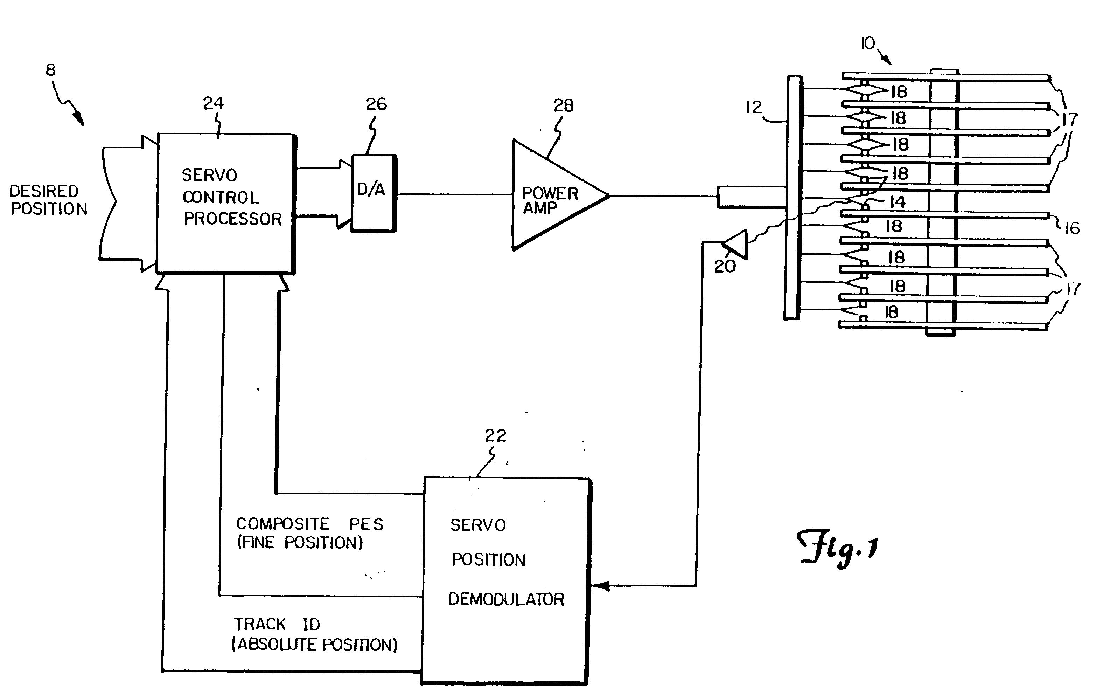

Figure 1 is a block diagram of a negative feed back transducer positioning system 8 according to the present invention. A stack of magnetically encodable disks is shown generally at 10. An electro-mechanical actuator (or E-block) 12 is used to position a servo transducer 14 and a plurality of data transducers 18 radially with respect to a servo disk 16 and data disks 17, respectively. The servo transducer is positioned over a desired track on the servo disk 16 where it is held while the data transducers 18, which are also connected to the E-block 12, perform read or write operations.

The servo transducer 14 reads position information from servo disk 16 and provides position signals to a pre-amplifier 20 where it is amplified and provided to a servo position demodulator 22. The servo position demodulator 22 decodes the position information and presents it, in digital form, to a servo control processor 24. The servo control processor 24 compares the decoded position signal received from the servo position demodulator 22 with a desired position signal to determine a transducer position error. The transducer position error represents the difference between the actual position of the transducer 14, indicated by the decoded position signal, and the desired position indicated by a desired position signal.

The servo control processor 24 then generates a position correction signal which is converted to an analog signal in digital-to-analog (D/A) converter 26 and applied to the E-block 12 through a power amplifier 28. The position correction signal causes the E-block 12 to move the transducers 14, 18 radially with respect to the disks 16, 17 in order to minimise the transducer position error.

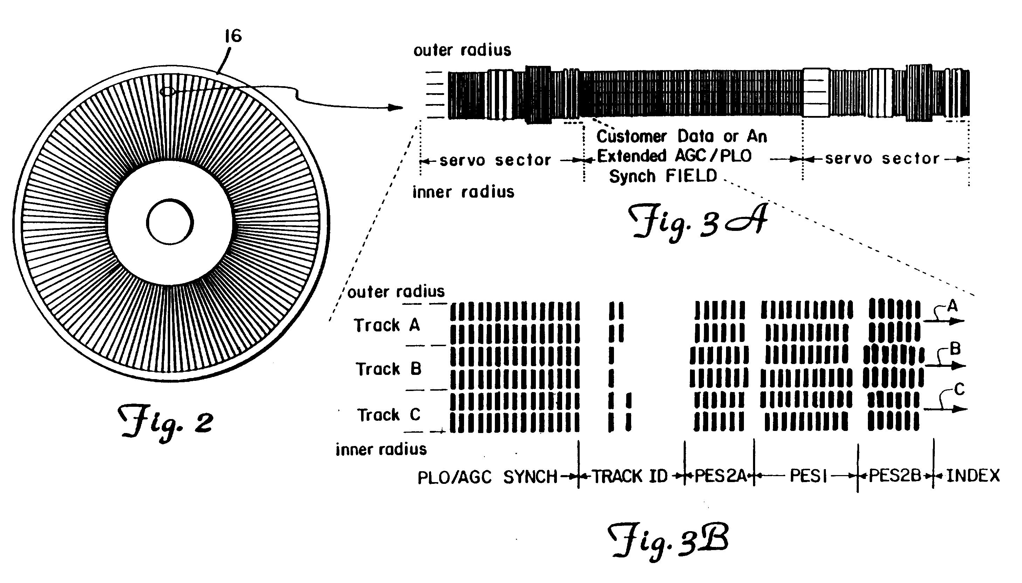

One disk surface of the servo disk 16 is dedicated to contain servo tracks. This surface is shown in Figure 2. The servo position information in the servo tracks is not continuous but is condensed into evenly spaced sectors. This is known as a sectored servo system. The servo transducer 14, flying over the servo sectors as the servo disk 16 rotates, produces a sampling effect in which the actual, decoded position information provided to the servo control processor 24 is up-dated at the end of each servo sector.

Figure 3A is an enlarged portion of one servo sector on the servo disk 16. Figure 3B shows the format of servo information, represented by black and white bars, in one servo sector on the servo disk 16. The black and white bars represent oppositely magnetised areas on a surface coating of the servo disk 16. The oppositely magnetised areas are recorded close enough together so that the position signal generated by the servo transducer 14 is generally sinusoidal.

Figure 3B shows that one servo sector contains several distinct fields. The fields include a phase locked oscillator/automatic gain control (PLO/AGC) synch field, a track identification (track ID) field, three position error sample (PES) fields and an index field. Figure 3B also shows the magnetised areas for three tracks A, B and C on servo disk 16 where the outer radius and inner radius of the tracks is indicated. The direction of the servo transducer velocity and the track centre of each track is indicated by dashed arrows A, B and C, respectively.

As the servo transducer 14 flies over the tracks A, B or C on the servo disk 16, it generates a generally sinusoidal position signal. The sinusoidal position signal represents the magnetically encoded information shown in Figure 3B.

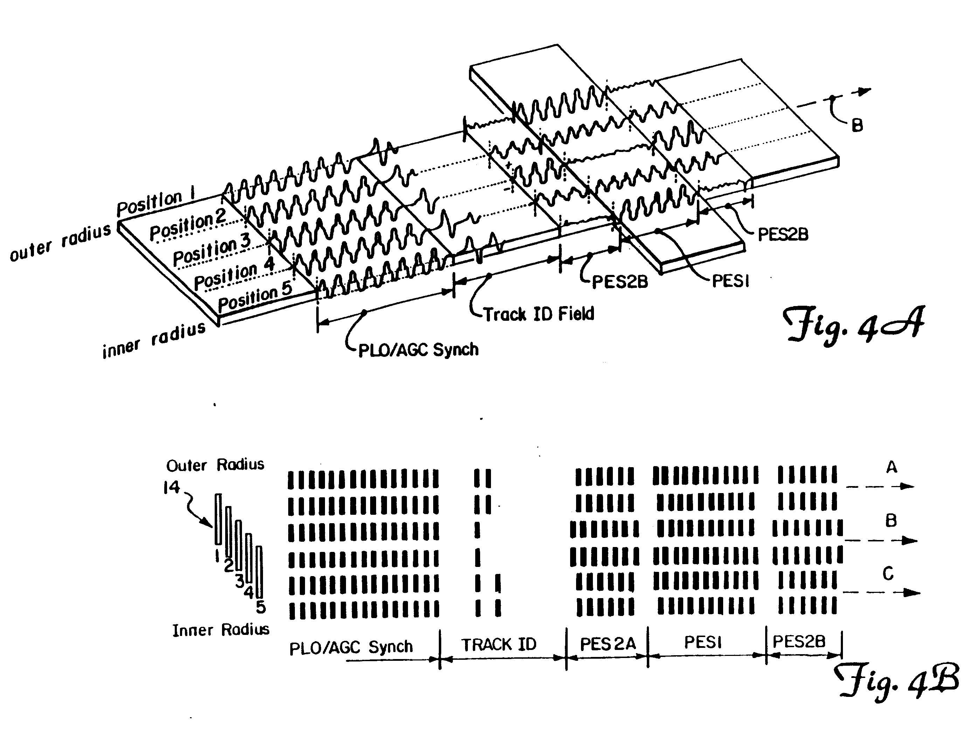

Figure 4A illustrates the position signal generated by the servo transducer 14 as a function of five radial transducer positions along a single track (for example track B) on the servo disk 16 where position 3 represents the centre of the track. Positions 1 and 5 represent off centre positions where the centre of the servo transducer 14 is radially aligned with, and flying over the outer radius or inner radius of track B, respectively. If the servo transducer 14 were tracking along position 1, a position error equal to the radial distance between position 1 and position 3 would exist. Similarly, if transducer 14 were tracking along position 5, a position error equal to the radial distance between position 3 and position 5 would exist.

Positions 2 and 4 also represent off centre positions. However, the off centre position error is not as large as the error associated with positions 1 and 5. Figure 4B shows the spatial relationship between the servo transducer 14, the magnetised areas of the servo disk 16, and each of the transducer positions 1 to 5.

The information encoded in the PLO/AGC synch field is identical in phase and frequency from track to track along the servo disk 16. Therefore, Figure 4A shows that, as the servo transducer 14 flies over this region, its output position signal is a constant frequency, independent of the particular track over which it is flying and independent of radial position on the track. The information in this field is encoded in this way so that a phase locked oscillator in the servo position demodulator 22 can synchronise with the output of the servo transducer 14.

In the track ID field, the track ID number is encoded as a Gray code where only one bit changes from track to track. Each track ID bit is represented by one dibit cell. The amplitude of a dibit depends on the radial position of servo transducer 14. If the dibit amplitude exceeds a given threshold, in this embodiment one half the maximum possible amplitude, the dibit is decoded as a logic 1 in the servo position demodulator 22. Otherwise, it is decoded as a logic 0. Therefore, $\underline{n}$ bit cells define $2^n$ servo tracks on the disk.

In the PES fields (PES1, PES2A and PES2B) the magnetic information encoded on adjacent tracks is recorded 180° out of phase. This produces a chequerboard pattern of magnetisation. The magnetic information in the PES fields is also recorded plus or minus 90° out of phase with respect to the magnetic information encoded in the PLO/AGC synch field.

The PES1 field is also called a normal field. The boundary between the magnetisation tracks in the normal field are arranged so that they lie on the centre line of the data tracks. Therefore, when the servo transducer 14 is over the normal field, as the servo transducer 14 moves radially further from the centre position 3 of track B, the amplitude of the position signal from the servo transducer 14 is larger. Similarly, as the servo transducer 14 moves radially closer to the centre position 3, the amplitude of the position signal is smaller.

The PES2 field (also known as a quadrature field) is split in half. Half of the quadrature field (the PES2A field) lies on one side of the normal field and half (the PES2B field) lies on an opposite side of the normal field. The quadrature field is encoded with a magnetisation pattern which is identical to that of the normal field but which is radially off-set from it by half a track width. Therefore, when the servo transducer 14 is over the quadrature field, the position signal provided by the servo transducer 14 is at a maximum amplitude when the servo transducer 14 is flying over the track centre position 3 and at a minimum amplitude when it is flying over the off centre positions 1 and 5.

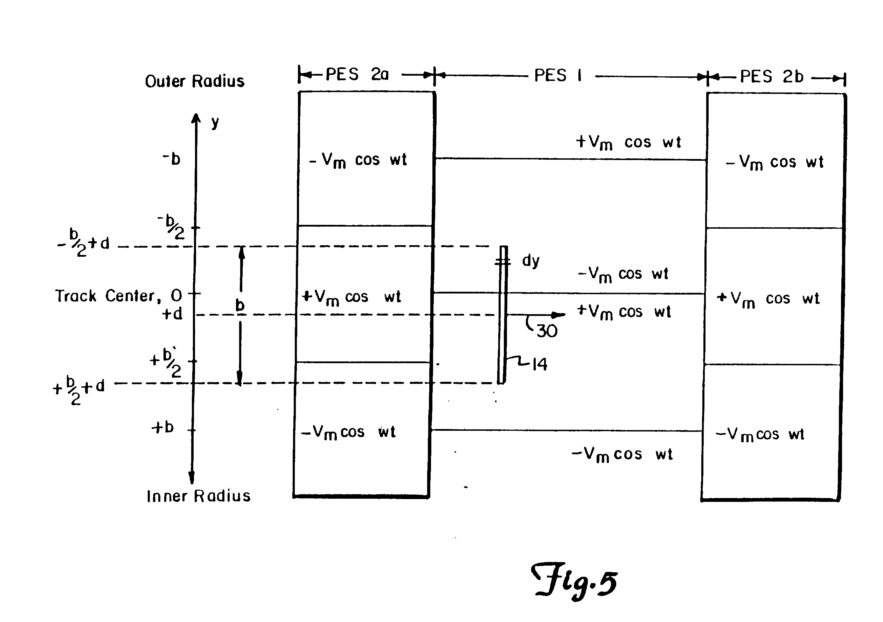

The information read from the normal and quadrature fields is referred to as a position error sample. The normal and quadrature fields each produce a separate position error sample. The amplitude of the position signal provided by the servo transducer 14 representing the position error samples is a linear function of the distance of the centre of the servo transducer 14 from the track centre (position 3). This is shown theoretically in Figure 5.

The servo transducer 14 is moving relative to the servo disk 16 in the direction indicated by arrow 30. The servo transducer 14 may be regarded as being composed of a set of read elements of differential width operating in parallel, whose output signals are added together or integrated to produce the total output voltage of the position signal from the servo transducer 14. For a first order approximation, it is assumed that the position signal from the servo transducer 14 is sinusoidal. Any fringing field effect is neglected. Since the magnetic pattern in the servo sector was originally written 180° out of phase for adjacent tracks, the signal produced by a differential read element, $dy$, will be defined as either plus or minus Vm Cos (wt). The total output voltage from the servo transducer 14 depends on how many differential read elements produce +Vm Cos (wt) and how many produce -Vm Cos (wt).

To express this mathematically, let $d$ equal the distance from the centre of the servo transducer 14 to the nearest data track centre (a boundary between the +Vm Cos (wt) and -Vm Cos (wt) regions in the PES1 field). The distance $d$ may be positive (towards the inner radius) or negative (towards the outer radius). If $b$ equals the width of the servo transducer 14, then each read element $dy$ contributes a fraction equal to $dy/b$ towards the total output voltage provided by the servo transducer 14. The integral for the PES1 field as shown in Figure 5 is solved as follows:

$$V(t) = \int_{-\frac{b}{2}+d}^{0} (^{-}Vm)\, Cos\; wt \cdot \frac{dy}{b} + \int_{0}^{+\frac{b}{2}+d} (^{+}Vm)\, Cos\; wt \cdot \frac{dy}{b}$$

$$= \frac{2d}{b}\, Vm\, Cos\, wt_{1} \cdot \quad -\frac{b}{2} \le d \le +\frac{b}{2} \qquad \ldots \quad Eq.\; 1$$

where

b       core gap width of transducer 14
Vm =   maximum amplitude
d =    off track error
w =    frequency of position signal.

The results show that the position signal of the servo transducer 14 V(t) has an amplitude which is a linear function of the off track error, $d$. This effect can be seen visually in Figure 4A where the signal amplitude in the PES1 field is proportional to the distance of the centre of the servo transducer 14 from the track centre, radial position 3. Also the polarity of the position signal generated by the servo transducer 14 which corresponds to the PES1 field indicates the direction of the off track error, $d$.

In reality, the amplitude of the position signal of the servo transducer 14 does not change linearly across the full track width. It becomes non-linear at some point near the outside twenty five percent of the track, depending on the physical dimensions of the servo transducer 14 and its relationship to the dimensions of the written magnetised pattern.

However, the presence of the quadrature field (PES2) allows the servo position demodulator 22 to overcome this non-linearity. Figure 4A shows the quadrature relationship between the PES2A and the PES2B fields and the PES1 field. The amplitude of the position signal provided by the servo transducer 14 in the PES2 field is at a maximum, and therefore in a non-linear region when the amplitude in the PES1 field is at a minimum (and therefore in a linear region), and vice versa. Hence, either the quadrature or the normal field is always in a linear region and there is always a linear relationship between the position signal corresponding to one of the PES fields (PES1 or PES2) and the distance between the centre of the servo transducer 14 and the track centre (the off track error) no matter where the servo transducer 14 is positioned across the radial width of a track on the servo disk 16.

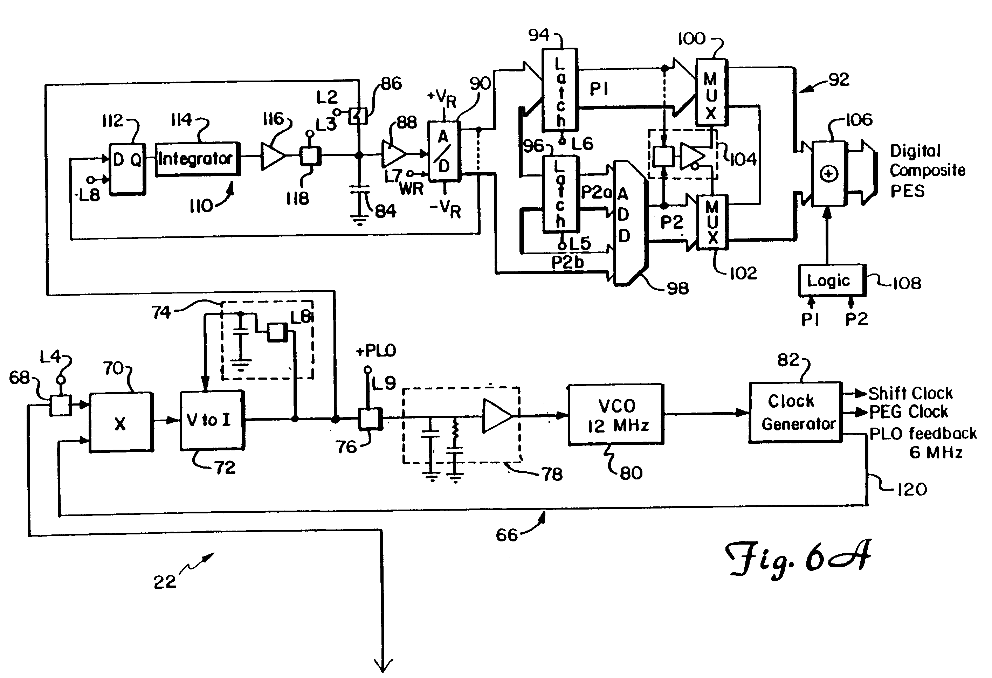

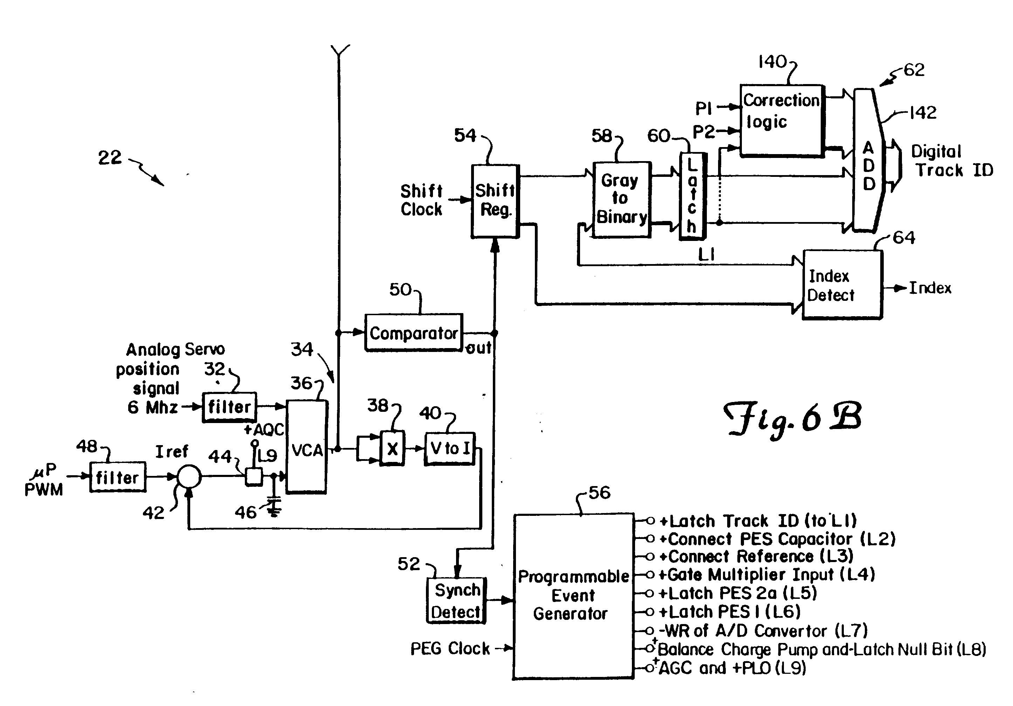

Figure 6 is a more detailed block diagram of the servo position demodulator 22 which decodes position information represented by the analog position signal from the servo transducer 14. The position signal from the servo transducer 14 is applied to a filter 32 where it is filtered to remove high frequency noise. The filtered signal is then applied to an automatic gain control (AGC) loop 34 (Figure 6B).

The AGC loop 34 is comprised of a voltage controlled amplifier 36, an analog multiplier 38, a voltage-to-current converter 40 and a current summing junction 42. An analog switch 44 and a capacitor 46 allow the AGC loop 34 to be configured in an acquire mode or a hold mode (explained later).

An overall reference for the automatic gain controlled amplitude is provided through a filter 48 by a micro-processor (not shown). The overall reference determines the final position gain in volts per microinch.

The AGC loop 34 is initially calibrated by the micro-processor and compensates for changes in input signal amplitude due to changes in track radius, flying height and other media properties.

Once properly amplified, an automatic gain controlled (AGC'd) analog signal from the AGC loop 34 is transmitted to a voltage comparator 50 which generates serial digital data corresponding to the AGC'd analog signal. The comparator 50 provides the serial digital data to a synch detector circuit 52 and a serial-to-parallel shift register 54.

The synch detector circuit 52 identifies the start of a servo sector and enables a programmable event generator (PEG) 56. The programmable event generator 56 produces timing and window logic signals required for position demodulation in the servo position demodulator 22.

Next, the comparator 50 decodes track ID dibits as either logic 1 or logic 0 depending on their amplitude. In this embodiment, the comparator 50 has a threshold of one half the maximum automatic gain controlled amplitude. The serial digital track ID bits are shifted into the shift register 54 to produce a parallel track ID word. This track ID word is in Gray code and is converted to a binary track ID word by combinational logic 58. The binary track ID word is latched in a latch 60 and provided to track ID correction logic 62 which will be explained in more detail later. The output of the correction logic 62 is a track identification signal or absolute position signal which identifies the particular track over which the servo transducer 14 is flying.

The shift register 54 is also used to provide index information to an index pattern detector 64 which is not important to an understanding of the present invention and so will not be discussed further.

The AGC'd analog signal from the AGC loop 34 is also transmitted to a phase locked oscillator loop (PLO loop) 66 (Figure 6A). The PLO loop 66 comprises an analog switch 68, a phase comparator/multiplier 70, a voltage-to-current converter (charge pump) 72, which includes a balance circuit 74 for balancing the voltage-to-current converter 72 once per servo sector so that there is zero current output for zero voltage input, an analog switch 76, a filter 78, a voltage controlled oscillator 80 and a clock generator 82. The PLO loop 66 locks onto the phase and frequency of the AGC'd analog signal provided by the AGC loop 34. Then, the analog switch 76 is opened allowing the PLO loop 66 to open. The signal provided to the voltage controlled oscillator 80 is then held constant. Hence, a constant frequency results at the output of the voltage controlled oscillator 80. Therefore, the frequency of a digital feed back signal 120 from the clock generator 82 is also constant.

The output of voltage to the voltage-to-current converter 72 is also provided to a PES capacitor 84 through an analog switch 86. Voltage is integrated on the capacitor 84 during synchronous demodulation of PES fields PES1, PES2A and PES2B. This voltage is applied through a buffer 88 to an analog-to-digital (A/D) converter 90. The output of the A/D converter 90 is provided to a composite PES generator logic 92. The composite PES generator logic 92 comprises latches 94, 96, a digital adder 98, multiplexers 100 and 102, multiplexer control logic 104, a switchable inverter 106 and inverter control logic 108. The output of the composite PES generator logic 92 is a composite PES word or fine position off track error which represents the distance that the servo transducer 14 is tracking from the track centre.

The composite PES word, together with the corrected track ID word, form one digital position word which is typically 19 bits long. The digital position word defines the radial position of the servo transducer 14 on the servo disk 16 in a continuous fashion down to approximately one or two micro-inches of quantisation.

The PES capacitor 84 is also selectively connected to a DC null loop 110 comprised of the A/D converter 90, a one-bit latch 112, and integrator 114, a buffer 116, an analog switch 118 and the buffer 88. The DC null loop 110 drives the initial voltage on the PES capacitor 84 to a mid-point between upper and lower reference voltages applied to an internal resistor ladder in the A/D converter 90.

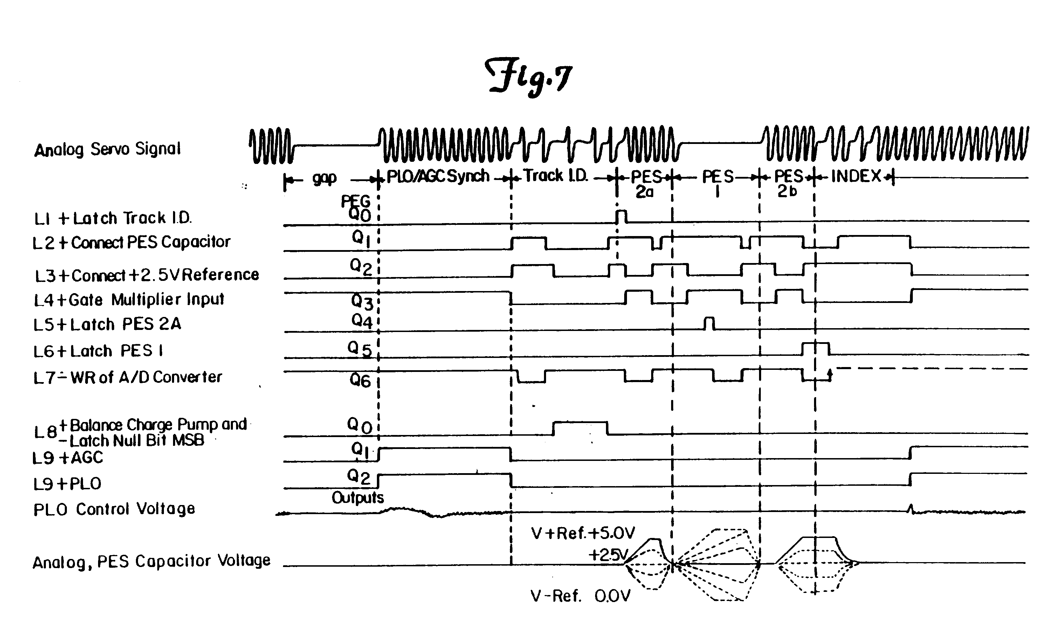

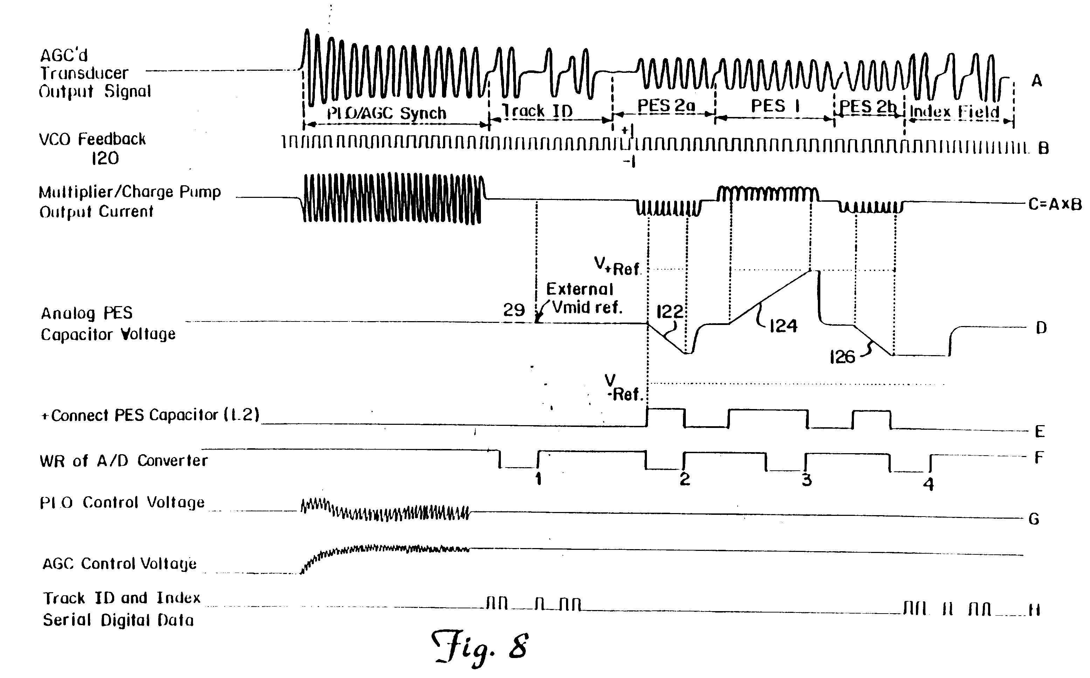

Operation of the positioning system is described with reference to Figures 7 and 8. Figure 7 is a timing diagram which shows the relationship between logic control signals generated by the programmable event generator 56, the analog position signal and the PES capacitor voltage as the servo transducer 14 moves over one servo sector. Figure 8 is a timing diagram showing the relationship between various signals related to the synchronous demodulation of the fine position information in the servo position demodulator 22 as the servo transducer 14 moves along one servo sector.

As the servo transducer 14 passes over the AGC/PLO synch field in the servo sector, the programmable event generator 56 closes the switch 44 to close the AGC loop 34. The AGC loop 34 acquires the proper gain so that the amplitude of the analog position signal is compensated for amplitude changes caused by changes in track radius, transducer flying height, and other media properties. Also, as the servo transducer 14 flies over the AGC/PLO synch field, the programmable event generator 56 closes the analog switches 68, 76 to close the PLO loop 66. When the PLO loop 66 is closed, the voltage control oscillator 80 locks onto the phase and frequency of the AGC'd analog signal provided by the AGC loop 34. The PLO loop 66 uses the digital feed back signal 120 which locks in at a 90° phase shift from the AGC'd analog signal provided by the AGC loop 34.

After the servo transducer 14 has passed over the PLO/AGC synch field, the analog switches 44, 76 are opened and both the AGC loop 34 and the PLO loop 66 enter a hold mode. While in the hold mode the amplification in the AGC loop 34 and the phase and frequency of the feed back signal 120 in the PLO loop 66 remain constant.

Next, the servo transducer 14 passes over the track ID field in the servo sector. The serial digital track ID bits are formed by the comparator 50 and shifted into the shift register 54. The Gray code track bits are converted into a binary code by the converter 58 and latched into the latch 60.

Finally, the servo transducer 14 enters the PES fields in the servo sector. The switch 68 is closed applying the analog position signal to the phase comparator/multiplier 70 while the switch 76 remains open. The feed back signal 120 is multiplied by the analog position signal in the phase comparator/multiplier 70. Since the information in the PLO/AGC synch field is recorded 90° out of phase with the information in the PES fields, and since the feed back signal 120 is held with a 90° phase shift, the multiplication performed at the phase comparator/multiplier 70 produces a full wave rectification of the analog position signal. This is shown by plot C in Figure 8.

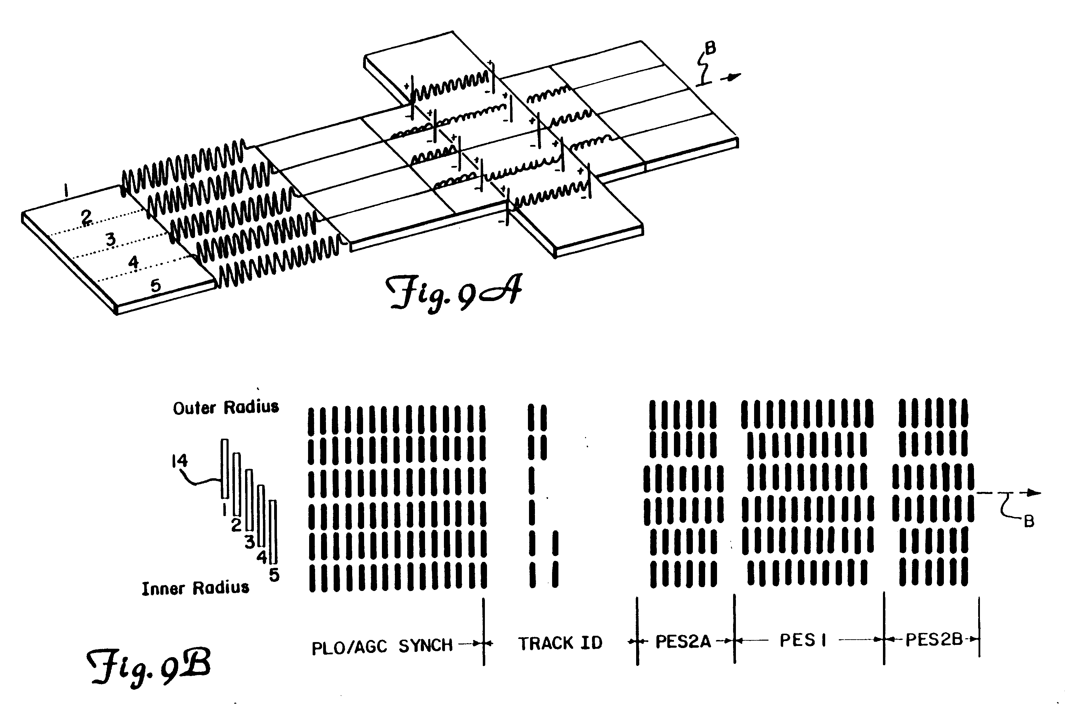

Figure 9A illustrates the output of the phase comparator/multiplier 70 for the five radial positions of the servo transducer 14 which were described earlier with reference to Figure 4A. Also, Figure 9B shows the spatial relationship between the centre of the servo transducer 14 and the centre of track B in radial transducer positions 1 to 5. In the PES fields, the amplitude of output signal of the phase comparator/multiplier 70 is proportional to the distance between the centre of the servo transducer 14 and the centre of track B. The polarity of the DC DC.component of the signal indicates the direction of the off-set. Hence, when the current provided by the voltage-to-current converter 72 is applied to the PES capacitor 84, the current is integrated, producing a positive or negative voltage ramp depending on the polarity of the current. Several such voltage ramps are indicated at points 122, 124 and 126 in Figure 8.

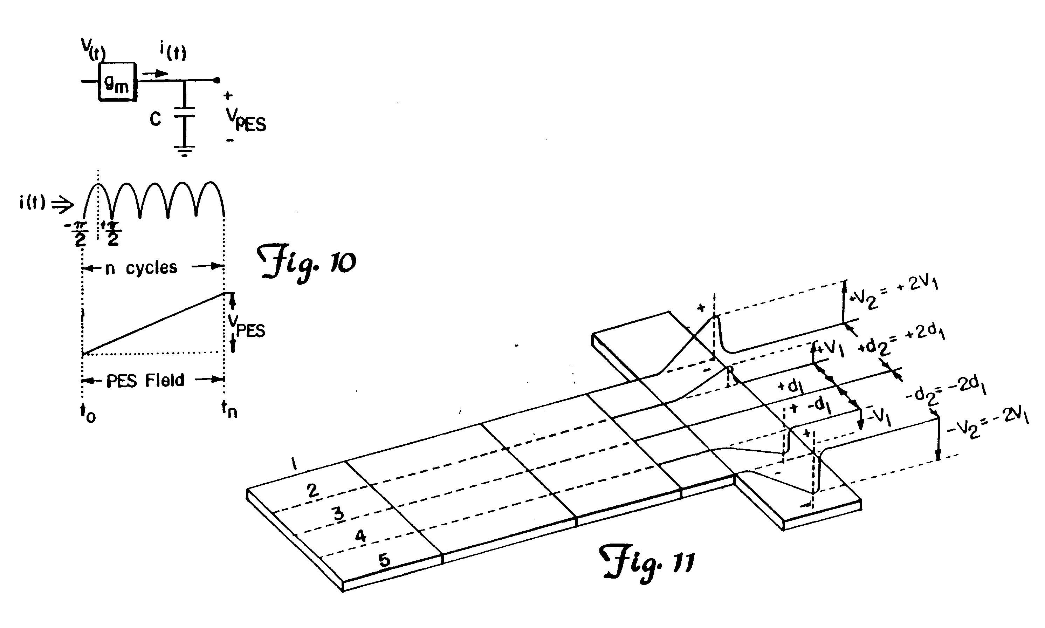

Figure 10 illustrates the general case where $\underline{n}$ cycles of current are integrated to produce the analog voltage on the PES capacitor 84 corresponding to one PES field. The integral is solved as follows:

$$V_{pes} = \frac{1}{c} \int\limits^{n\ cycles} i(t)dt = \frac{n}{c} \int\limits^{1\ cycle} i(t)dt = \frac{n}{c} \int\limits^{+\pi/2} i(\theta)\frac{d\theta}{w}$$

$$= \frac{n}{c} \int\limits_{-\pi/2}^{+\pi/2} \frac{2d}{b} V_m\ gm\ \cos\theta\ \frac{1}{w}\ d\theta = \frac{n}{c} \cdot \frac{2}{b} \cdot \frac{2V_m gm}{w} \cdot d$$

$$\ldots\quad Eq.\ 2$$

where

n = cycles measured
b = width of transducer 14
c = capacitance of PES capacitor 84

Vm = maximum AGC'd amplitude
gm = gain through charge pump 72
w = frequency of position signal.

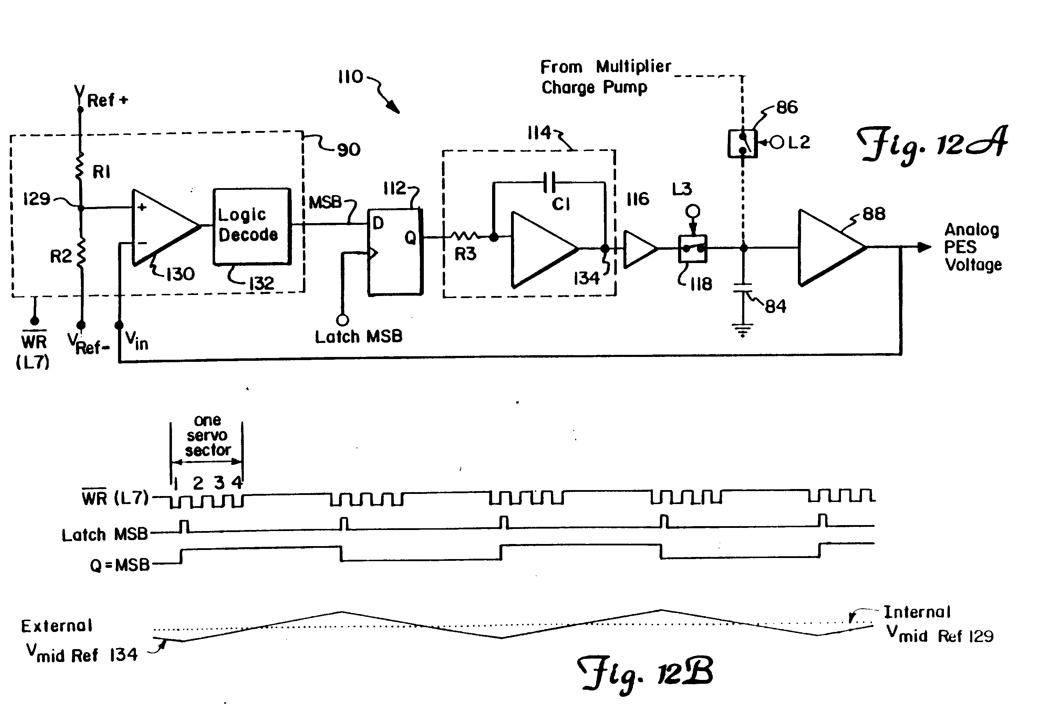

The result shows that the final voltage on the PES capacitor 84 is directly proportional to the off track error, d, since n, c, b, Vm, gm and w are all constants. The relationship between the final analog voltage on the PES capacitor 84 corresponding to the PES1 field and the off track error, d, is graphically illustrated in Figure 11. The voltage ramps for five radial positions in one servo sector are shown as they relate to off track error, d.

The final voltage on the PES capacitor 84 is also proportional to the number, n, of cycles integrated. In the PES1 field, n cycles are integrated and the A/D converter 90 converts the analog voltage on the PES capacitor 84 into a digital signal which is latched in the latch 94. For the PES2 fields, first n/2 cycles (for the PES2A field) are integrated and the A/D converter 90 converts the value to a digital signal which is latched in the latch 96. Then, after the PES1 field is integrated, another n/2 cycles (for the PES2B field) are integrated and another A/D conversion is made by the A/D converter 90. The resulting digital signal is provided to the adder 98 where the digital signal representing the PES2A field is added to it to produce a full PES2 position sample. The number of cycles, n, chosen should be high enough to achieve the averaging of possible media defects over several cycles. However, it must not be so high as to produce an overly long servo sector since the length of the servo sector limits the maximum radial velocity of the servo transducer 14.

The final voltage on the PES capacitor 84 is also proportional to the capacitance of the PES capacitor 84. Note that the same PES capacitor 84 is used to produce the analog PES voltage for both the PES1 and PES2 position samples. After the A/D conversion of the final ramp voltage of a PES measurement, the digital result is latched so the analog voltage on the PES capacitor 84 can be re-set, and the same PES capacitor 84 can be reused for the next PES measurement. This eliminates the possibility of position error due to capacitance mismatch which would result if two or more capacitors were used to produce the analog PES voltage. Using only one capacitor to integrate the position signal for both the quadrature and normal fields increases the accuracy with which the servo transducer 14 follows the track.

Accordingly, only a single A/D converter 90 is required to convert the analog PES voltages to digital signals. This lowers the overall cost of the servo position demodulator 22. Also, the A/D conversion made by the A/D converter 90 is made early in the processing chain in the servo position demodulator 22. The addition of the PES2A and PES2B position samples and the formation of the composite PES signal all take place in the digital domain. This minimises the amount of analog circuitry and associated errors such as off-set errors, gain errors, linearity errors and variation with temperature. Additionally, all of the digital circuits can be fabricated into one compact integrated circuit to save space.

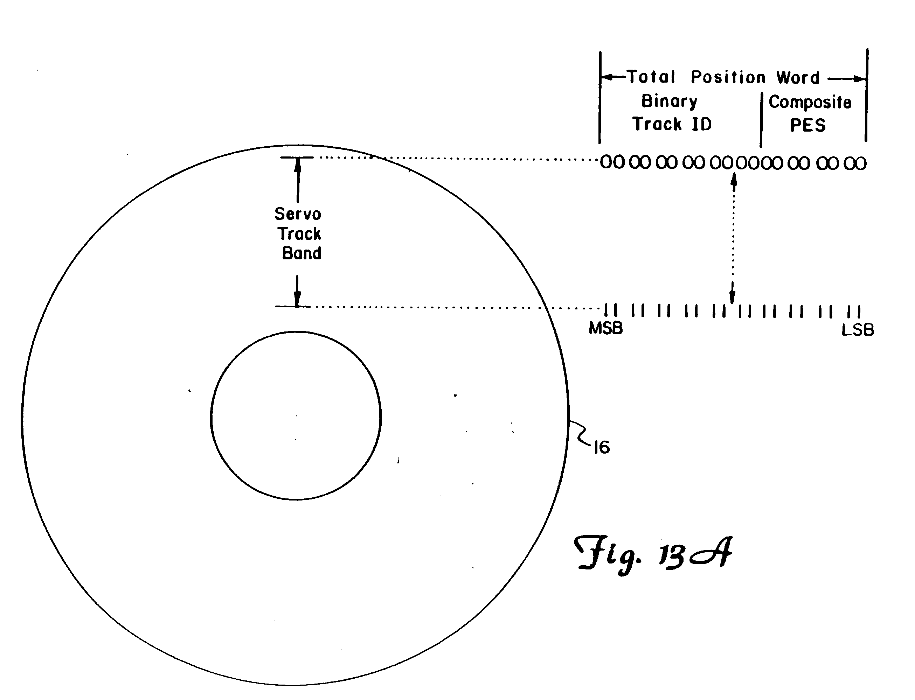

Because DC voltage off-sets in the buffer 88 and the analog switch 118 would create an off-set error in the final digital composite PES signal, the DC null loop 110 is provided. Figure 12A shows the DC null loop 110 in greater detail and Figure 12B is a timing diagram showing the relationship between signals occurring in the DC null loop 110. As the servo transducer 14 passes over each servo sector, and before it reaches the PES fields, the programmable event generator 56 closes analog switch L3 connecting PES capacitor 84 to the output voltage of integrator 114.

Next, programmable event generator 56 generates a signal on an output L7 causing the A/D converter 90 to perform a first A/D conversion. The A/D converter 90 comprises a resistor ladder connected between reference voltages VREF+ and VREF-, 15 comparators including a most significant bit comparator 130, and a logic decode 132 which decodes a most significant bit of the A/D converter 90. Resistors R1 and R2 which represent the resistor ladder condensed into two resistors, act as a voltage divider creating an internal voltage mid-point Vmidref at a node 129.

After the first A/D conversion, the most significant bit of the A/D converter 90 is decoded and latched into the one-bit latch 112. The value of the latched most significant bit depends on whether signal Vin is greater or less than the internal voltage Vmidref at the node 129. During initial calibration of the servo position demodulator 22, the gain in the AGC loop 34 is set so that the A/D converter 90 full digital scale corresponds to one half of a servo track. The internal voltage Vmidref corresponds to the track centre or zero position error. The latched, most significant bit is applied to the integrator 114. The output of the integrator 114, an external voltage Vmidref at a node 134, is driven towards the value of the internal voltage Vmidref. The gain through the integrator 114 is chosen so that the external voltage Vmidref just crosses the internal voltage Vmidref before the next servo sector. This is shown in Figure 12B. The peak to peak limits of the external voltage Vmidref must be kept much lower than the analog value of a least significant bit of the A/D converter 90. This keeps the initial voltage on the PES capacitor 84 as close as possible to the exact centre of the digital scale

After the first A/D conversion is completed, the switch 118 is opened and the A/D converter 90 is available for conversions 2, 3 and 4 which are conversions for the position samples read from the PES2A, PES1 and PES2B fields. Between position samples, the switch 118 closes to re-set the PES capacitor 84 to the external voltage Vmidref. Hence, the DC null loop 110 compensates for static or time variable DC off-sets in the buffer 88 and the switch 118, which are inside the DC null loop 110. This increases the track following accuracy of the servo transducer 14.

The technique of time multiplexing the A/D converter 90 between DC null loop operation and PES conversions eliminates the need for two separate A/D converters to perform these tasks. This reduces the cost of the servo position demodulator 22.

As described earlier, after the PES capacitor 84 is re-set to the external voltage Vmidref, the output of voltage to the voltage-to-current converter 72 is connected to the PES capacitor 84 through the analog switch 86 and the PES capacitor voltage ramps up or down as shown in Figure 8. The difference between the final voltage on the PES capacitor 84 and the initial voltage is proportional to the distance of the centre of the servo transducer 14 from the track centre.

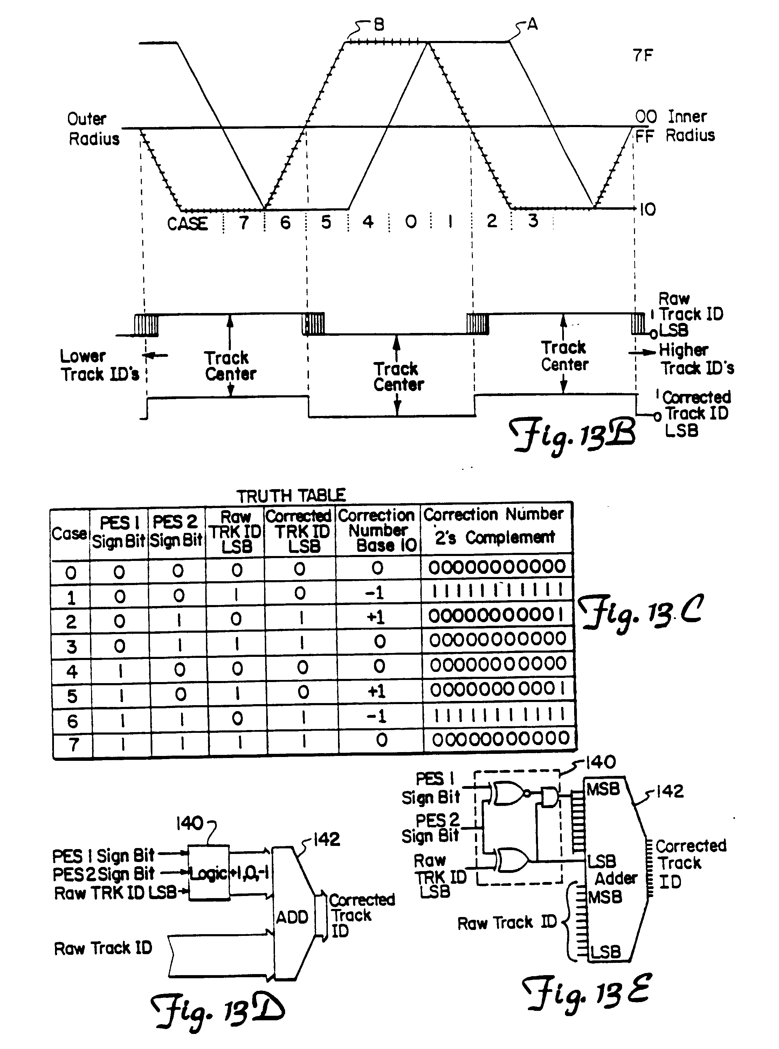

Figure 13A shows the concept of a total position word. The track ID number and the digital value representing the PES field samples are combined to define the radial position of the servo transducer 14 anywhere on the servo disk 16. The track ID number defines the track and the PES samples define the position within the track.

However, a problem can still arise. As the servo transducer 14 flies over the track on the servo disk 16, it moves over the track ID field prior to moving over the PES fields. Hence, the track ID information is decoded earlier in time than information read from the PES fields. Since the information read from the PES fields is read later in time, it is more recent and, hence, more accurate position information than that read from the track ID field. When the servo transducer 14 is moving radially, it has a slanted trajectory across the servo sector. Therefore, it may enter the servo sector in the track ID field of one track but cross a boundary between tracks and exit the servo sector from the PES field of the next track. This will result in an occasional mis-match between the track boundary defined by the track identification information and that defined by the PES fields. It then becomes necessary to correct the track ID number so that it corresponds to the track from which the servo transducer 14 reads the PES field samples.

In the present embodiment, correction logic 140 (shown in Figures 6B and 13D) is used to detect when it is necessary to correct the track ID so that it corresponds to the track number from which the PES field samples were read. Figure 13B is a graph of the amplitude of the position signal corresponding to the PES fields, in 2's complement form, as it relates to the least significant bit in the track ID signal. Figure 13B also shows a corrected least significant bit in the track ID signal.

Trace A represents the 2's complement form of the amplitude of the position signal corresponding to the PES1 field. Trace B represents the 2's complement amplitude corresponding to the PES2 field (the PES2A field + the PES2B field). The truth table shown in Figure 13C defines the conditions where the track ID information is not correlated with the PES field information and the correction word which is required.

The correction logic 140, shown in Figure 13D, forms a correction number of ± 1 which is added to the track ID in an adder 142. For all other cases, the number 0 is added to the track ID.

Figure 13E shows the correction logic 140 in more detail. It should be noted that the addition of the correction word to the track ID could also be accomplished by software in the servo control processor 24. This correlation allows the servo control processor 24 to use bits of the digital composite PES signal along with a track ID to determine very precisely the position and velocity of the servo transducer 14 even at high radial velocities. The increased accuracy of the total position signal at high radial velocities helps to minimise both the time and power required for performing a track seek operation. At low radial velocities, such as at the end of a track seek operation, this correlation permits a smoother settling of the servo transducer on a track.

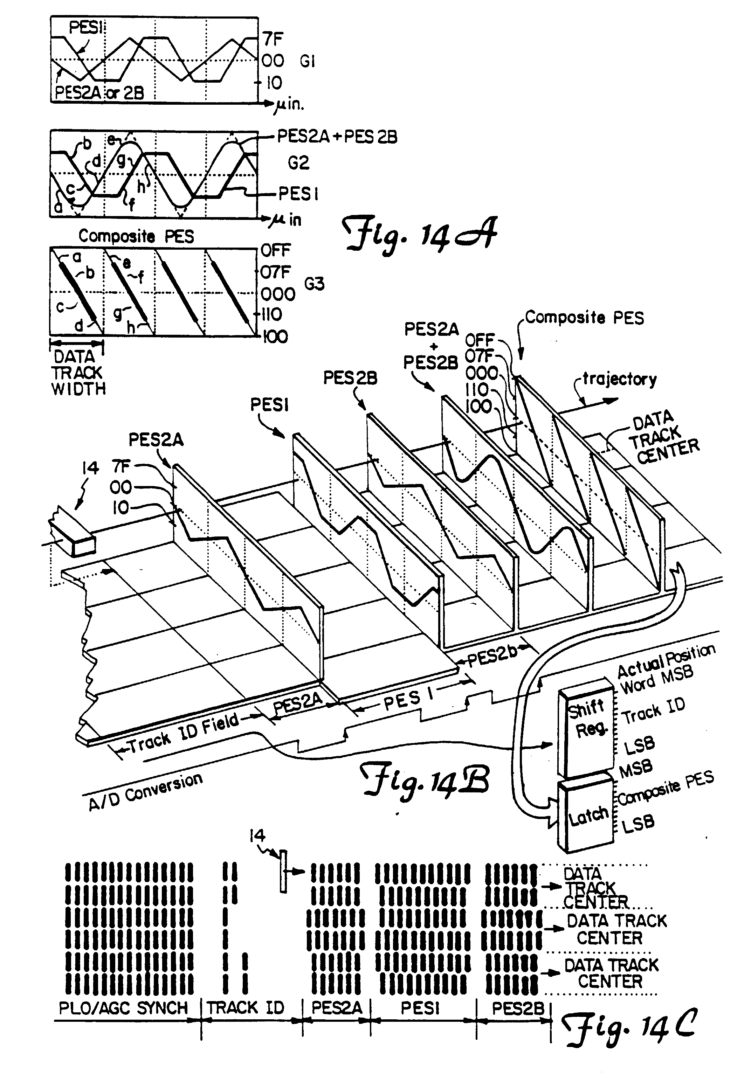

Figure 14A is an imaginary tracing of digitised final voltage values of the analog PES ramps generated at the PES capacitor 84 for all radial positions of the servo transducer 14 across four adjacent tracks in a servo-on-data system. These imaginary tracings are called track crossing plots. The digital values are in 2's complement form and the point at which the track crossing plot for the PES1 field crosses 00 hex represents the track centre.

Demodulation of the PES2A field produces the PES2A tracking plot shown in graph G1 of Figure 14A. Similarly, demodulation of the PES1 and PES2B fields produces the PES1 and PES2B track crossing plots, respectively. These three track crossing plots represent all possible ideal digital input combinations to the composite PES generator 92.

Graph G1 in Figure 14A shows the three track crossing plots condensed onto a single plane. Since there are equal number of cycles in the PES2A field and the PES2B field, their corresponding track crossing plots coincide. However, since the integration measurement time period for the PES2A and PES2B fields is only one half that of the PES1 field, the slope of the PES2A and PES2B track crossing plots in volts per micro-inch is only one half that of the PES1 track crossing plot.

The PES2A position sample is added to the PES2B position sample to produce the total PES2 or quadrature sample. One hardware implementation to perform this addition was discussed with reference to Figure 6. This addition can also be performed graphically. Graph G2 in Figure 14A shows that the addition of the PES2A and PES2B track crossing plots produces a new track crossing plot which has the same slope as the PES1 track crossing plot.

The PES1 and PES2 track crossing plots shown in graph G2 in Figure 14A are the inputs to the composite PES generator 92. However, at only one radial position along the servo disk 16, only one of the two plots is in a region where the PES amplitude is changing linearly with transducer position. There are eight distinct regions labelled a to h which repeat across the track. By monitoring the amplitude and polarity of the PES1 and PES2 position samples, the composite PES generator 92 determines over which of the eight regions the servo transducer 14 is flying. The composite PES generator 92 then creates a composite position error sample output which is the standardised form of position error sample required by the servo control processor 24. The composite PES generator 92 accomplishes this by inverting the slope or changing the sign bit of the PES1 or PES2 track crossing plots when necessary, and combining the linear portions to create the desired composite PES track crossing plot shown in graph G3 in Figure 14A.

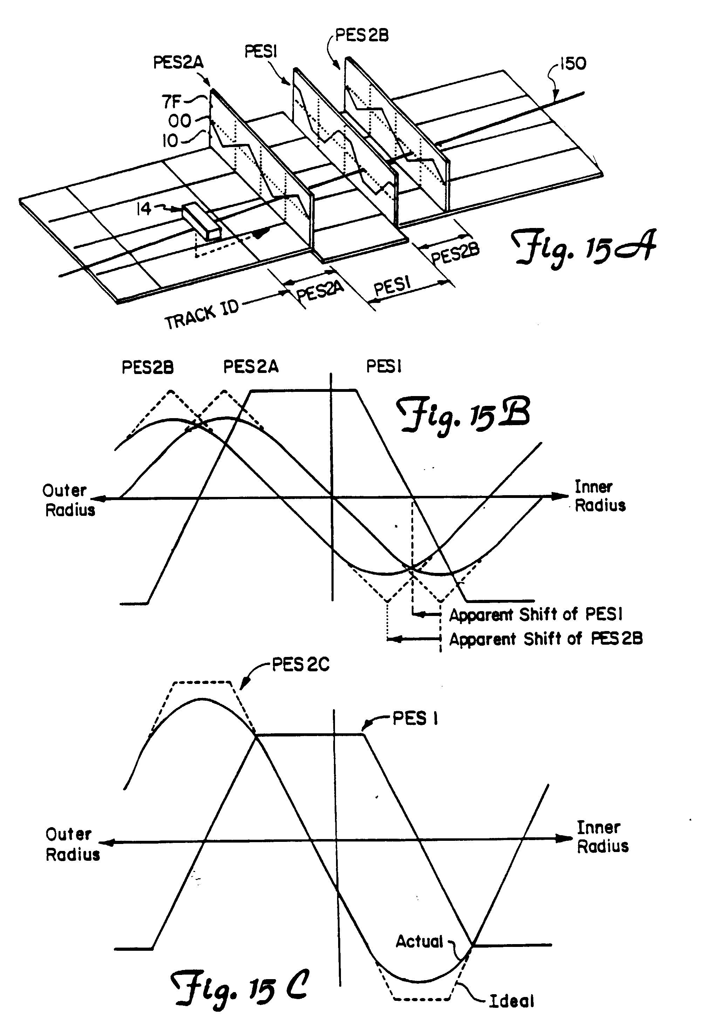

Figures 15A to 15C show how the addition of the PES2A and PES2B position samples helps to compensate for high radial velocity of the servo transducer 14. A slanted trajectory of the servo transducer 14 is shown by arrow 150 in Figure 15A. This slanted trajectory causes an apparent shift in the PES1 and PES2B track crossing plots as shown in Figure 15B. The actual value of the PES2A and PES2B fields is shown by a solid line and the ideal value is shown by a dashed line. By adding the PES2A track crossing plot with the shifted PES2B track crossing plot, a new track crossing plot, PES2C, is formed as shown in Figure 15C. The PES2C track crossing plot has the correct orientation with respect to the PES1 track crossing plot. By using this technique, the composite PES output is generated correctly, independent of the radial velocity of the servo transducer 14. Without this feature, non-linearities in the composite PES output would occur due to the slanted trajectory of the servo transducer 14. This allows more efficient actuator control during track seek operations.

This invention is not limited for use in dedicated servo systems such as the one shown in Figure 1. This invention may also be used in hydrid servo configurations. A hybrid system has a dedicated surface containing servo sectors and other disks which contain one or more similar servo sectors per revolution which are decoded for data transducer thermal off-set compensation. Since a common servo sector pattern is used, through the use of time multiplexing only one servo position demodulator is needed.

The present invention may also be used in servo-on-data type servo systems where each disk surface has servo sectors. In this type of system, customer data is written between the write protected servo sectors. Any head actively reading or writing customer data is also acting as its own track following error sensor. This increases track following precision and allows higher track densities to be achieved.

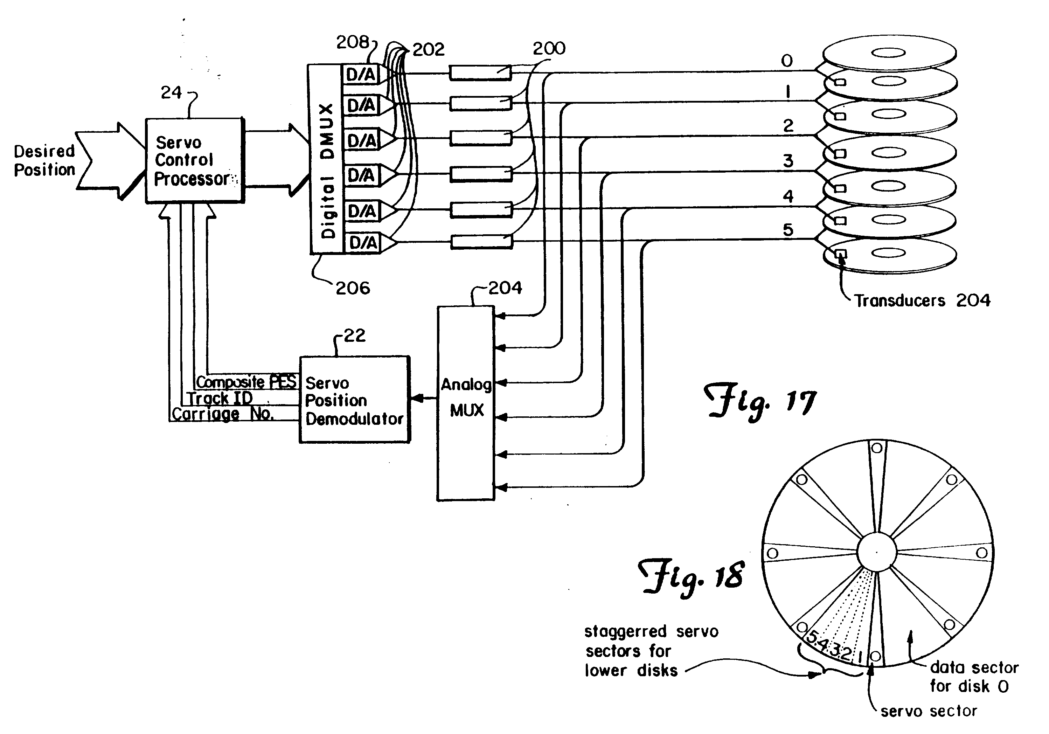

Another servo system configuration in which this invention may be used is one having multiple independent actuators 200. This is shown in Figure 17. If a multiple actuator system contains $n$ actuators 200 and corresponding amplifiers 202, the servo sectors under servo transducers 204 on adjacent actuators are staggered by 1/n of the distance between servo sectors on one disk. The servo sectors for adjacent actuators must not overlap. This is illustrated in Figure 18. In this type of system, a multiplexer 205 continuously cycles through the servo sectors of the actuators 200. The advantage of this configuration is that only one servo control processor 24, along with a digital demultiplexer 206, D/A converters 208, the amplifiers 202 and one servo demodulator 22 are needed to control several actuators 200 (again through the use of time multiplexing).

The servo sector format described in this invention may be used with linear or rotary actuators.

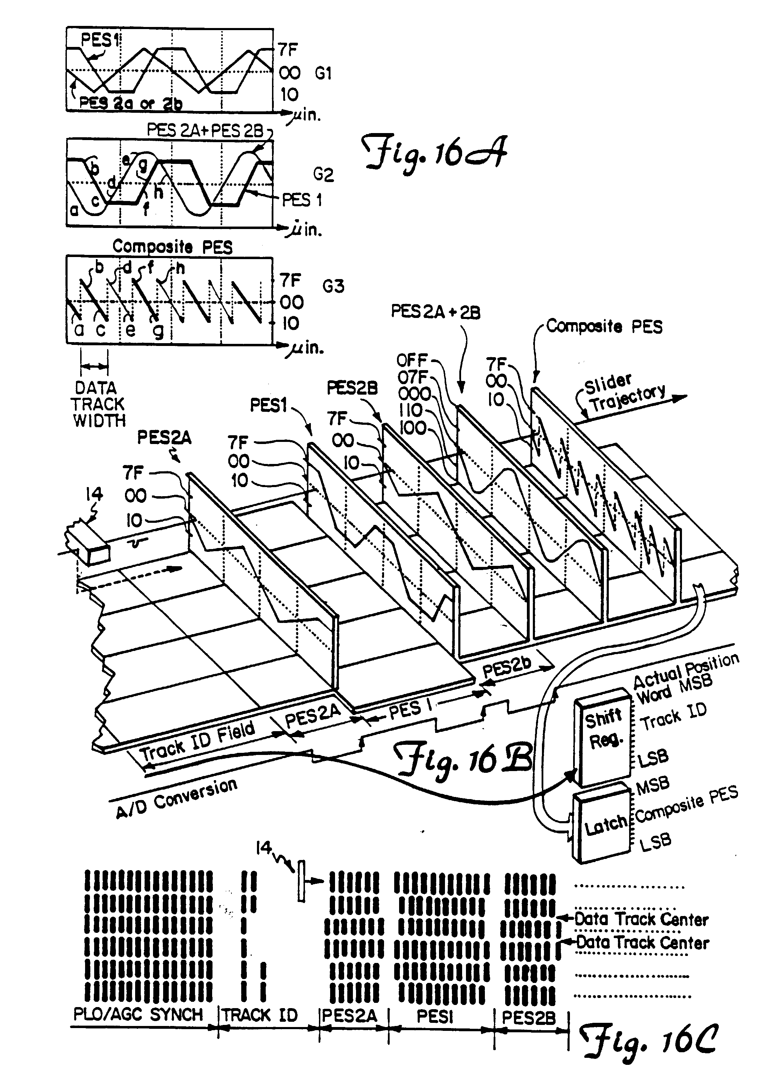

A method for creating the composite PES output for a dedicated servo system is shown in Figures 16A to 16C. The servo track width can be twice the data track width. The servo transducer 14 is then twice as wide as a data transducer 18. This can help minimise non-linear effects of fringing fields read by the edges of the servo transducer 14. It can also improve the signal to noise ratio of the track ID bits. In this case, the composite PES generator 92 merely inverts the slope of the $d$, $e$, $f$ and $g$ segments. The servo track centres are derived alternately from PES1 and PES2 position samples.

For a servo-on-data system, the transducer is used for both serving and reading and writing customer data. The servo track and data track are automatically the same width. The composite PES track crossing plot is then formed as shown in graph G3 in Figure 14A. Slope segments $a$ and $d$ are re-positioned to extend the linearity of the $b$ and $c$ segments. This produces a linear PES plot across the full track width. Similarly, the $e$ and $h$ segments extend the linearity of the $f$ and $g$ segments. The track centre is always derived from the PES1 position sample. One advantageous feature of this method is that the composite PES field has one more bit of quantisation than the A/D converter 90 used in the servo position demodulator 22.

The present invention uses only one integrating capacitor for integrating position error signals in both the quadrature and normal fields in the servo position demodulator 22. This eliminates any position error caused by differences in capacitance in theoretically matched capacitors used in prior systems.

Also, only a single A/D converter is used. The A/D converter 90 is time multiplexed into the DC null loop as well as the PES conversions. This reduces the cost of the servo position demodulator 22.

Further, the A/D conversion for the PES samples is completed early in the signal processing chain. This minimises errors attributable to analog electronics in the processing chain.

In addition, the nulling system compensates for static or time variable DC off-sets in the electronics surrounding the integrating capacitor. This increases the track following accuracy of the positioning system 8.

**Claims**

1. A demodulating system (8) for demodulating position information signals provided by a transducer (14) in response to position information read from a disk in a data storage system (10), the system comprising: amplifier means (34), coupled to the transducer (24), for amplifying the position information signals to provide amplified position signals; rectifier means (70), coupled to the amplifier means (34), for rectifying the amplified position signals to provide rectified position signals; first integrating means (84), selectively coupled to the rectifier means (70), for integrating the rectified position signals to produce position error signals; an analog-to-digital (A/D) converter (90) coupled to the first integrating means (84), for converting the position error signals into logic output signals representative of the position error signals; and nulling means (110), selectively coupled to the first integrating means (84), for providing the first integrating means with a reference signal to initialise the first integrating means (84); characterised in that the A/D converter (90) is time multiplexed between use in controlling the nulling means (110) to initialize the first integrating means (84) and converting the position error signals into the logic output signals.

2. A system as claimed in claim 1 characterised in that the nulling means (110) further comprises: null storage means (112), coupled to a bit of the A/D converter (90), for storing the logic level of the bit; second integrating means (114), coupled to the null storage means (116) and selectively coupled to the first integrating means (84), for selectively providing the reference signal to the first integrating means, the reference signal being determined based on the digital value stored in the null storage means (110); and feed back means, coupled to the first integrating means (84) and the A/D converter (90), for feeding the voltage across the first integrating means (84) back to the A/D converter (90) for comparison with a reference signal representing zero position error, the comparison determining the logic level of the bit of the A/D converter stored in the null storage means.

3. A system as claimed in claim 1 or 2 characterised by including storing means (94, 96) coupled to the A/D converter (90), for storing logic information representative of the logic output signals; and composite generator means (98, 100, 102, 104, 106, 108), coupled to the storing means, for combining the logic information to form a composite position error signal representative of the position information read from the disk.

4. A system as claimed in claim 1, 2 or 3, characterised in that the position information read from the disk is read from a quadrature field (PES2) and a normal field (PES1), the A/D converter (90) converts the position error signals to digital logic signals representative of the position information read from both the quadrature field and the normal field, and the digital logic signals are combined to form a composite position error signal representative of the position information read from both the quadrature field and the normal field, wherein the step of combining is performed after converting the position error signals to the digital logic signals.

5. A system as claimed in any of claims 1 to 4 characterised in that the amplifier means (34) comprises: filter means (32), coupled to the transducer (14), for filtering the position information signals to provide filtered signals; and automatic gain control means (34), coupled to the filter means (32), the controller means (24) and the rectifier means (70), for varying amplification of the filtered signals.

6. A system as claimed in any of claims 1 to 5 characterised in that the rectifier means further comprises: digital oscillator means (80), selectively coupled to the amplifier means (34), for providing a digital oscillator signal which oscillates 90° out of phase with the amplified position signals; and multiplier means (70), selectively coupled to the amplifier means (34), for multiplying the amplified position signals by the digital oscillator signal to provide the rectified position signals.

7. A system as claimed in claim 6 characterised in that the digital oscillator means (80) further comprises: a phase locked oscillator loop (120) for locking onto a signal 90° out of phase with the amplified position signals.

8. A method of demodulating position information signals provided by a transducer (14) in response to position information read from a disk in a data storage system (10), the method comprising: amplifying the position information signals to provide amplified position signals; rectifying the amplified position signals to provide rectified position signals; providing integrating means (84) for integrating the rectified position signals to produce position error signals; providing an analog-to-digital (A/D) converter (90) for converting the position error signals into logic output signals representative of the position error signals; and selectively coupling nulling means (110) to the integrating means (84) for providing the integrating means with a reference signal to initialise the integrating means; characterised in that the A/D converter (90) is time multiplexed between use in controlling the nulling means (110) to initialize the integrating means (84) and converting the position error signals into logic output signals.

**9.** A method as claimed in claim 8 characterised in that the position information read from the disk is read from a quadrature field (PES2) and a normal field (PES1), the A/D converter (90) converts the position error signals to digital logic signals representative of the position information from both the quadrature field and the normal field, and the digital logic signals are combined to form a composite position error signal representative of the position information read from both the quadrature field and the normal field, wherein the step of combining is performed after converting the position error signals to the digital logic signals.

**Patentansprüche**

**1.** Demodulationssystem (8) zur Demodulation von Positionsinformationssignalen, die von einem Wandler (14) in Abhängigkeit von von einer Platte in einem Datenspeichersystem (10) gelesenen Positionsinformationen geliefert werden, wobei das System folgende Teile aufweist: mit dem Wandler (24) gekoppelte Verstärkereinrichtungen (34) zur Verstärkung der Positionsinformationssignale zur Lieferung verstärkter Positionssignale, mit den Verstärkereinrichtungen (34) gekoppelte Gleichrichtereinrichtungen (70) zur Gleichrichtung der verstärkten Positionssignale zur Lieferung gleichgerichteter Positionssignale, erste Integrationseinrichtungen (84), die selektiv mit den Gleichrichtereinrichtungen (70) gekoppelt sind, um die gleichgerichteten Positionssignale zu integrieren, um Positionsfehlersignale zu erzeugen, einen Analog-/Digital- (A/D-) Wandler (90), der mit der ersten Integrationseinrichtung (84) gekoppelt ist, um die Positionsfehlersignale in Logikausgangssignale umzuwandeln, die die Positionsfehlersignale darstellen, und eine Nullabgleicheinrichtung (110), die selektiv mit den ersten Integrationseinrichtungen (84) gekoppelt ist, um den ersten Integrationseinrichtungen ein Bezugssignal zu liefern, um die ersten Integrationseinrichtungen (84) zu initialisieren, dadurch gekennzeichnet, daß der A/D-Wandler (90) im Zeitmultiplexbetrieb zwischen der Verwendung bei der Steuerung der Nullabgleicheinrichtung (110) zur Initialisierung der ersten Integrationseinrichtung (84) und der Umwandlung der Positionsfehlersignale in die logischen Ausgangssignale betrieben wird.

**2.** System nach Anspruch 1, dadurch gekennzeichnet, daß die Nullabgleicheinrichtung (110) weiterhin folgende Teile aufweist: Nullabgleich-Speichereinrichtungen (112), die mit einem Bit des A/D-Wandlers (90) gekoppelt sind, um den Logikpegel des Bits zu speichern, zweite Integrationseinrichtungen (114), die mit den Nullabgleich-Speichereinrichtungen (116) gekoppelt sind und die selektiv mit den ersten Integrationseinrichtungen (84) gekoppelt sind, um selektiv das Bezugssignal an die ersten Integrationseinrichtungen zu liefern, wobei das Bezugssignal auf der Grundlage des Digitalwertes bestimmt wird, der in den Nullabgleich-Speichereinrichtungen (110) gespeichert ist, und Rückführungseinrichtungen, die mit den ersten Integrationseinrichtungen (84) und dem A/D-Wandler (90) gekoppelt sind, um die Spannung längs der ersten Integrationseinrichtungen (84) zurück zum A/D-Wandler (90) zum Vergleich mit einem Bezugssignal zu führen, das einen Positionsfehler von Null darstellt, wobei der Vergleich den Logikpegel des Bits des A/D-Wandlers bestimmt, das in den Nullabgleich-Speichereinrichtungen gespeichert wird.

**3.** System nach Anspruch 1 oder 2, gekennzeichnet durch mit dem A/D-Wandler (90) gekoppelte Speichereinrichtungen (94,96) zur Speicherung von Logikinformation, die die Logik-Ausgangssignale darstellt, und Verbund-Generatoreinrichtungen (98,100,102,104,106,108), die mit den Speichereinrichtungen gekoppelt sind, um die Logikinformation zu kombinieren, um ein Verbund-Positionsfehlersignal zu bilden, das die von der Platte gelesene Positionsinformation darstellt.

**4.** System nach Anspruch 1, 2 oder 3, dadurch gekennzeichnet, daß die von der Platte gelesene Positionsinformation von einem Quadraturfeld (PES2) und von einem Normalfeld (PES1) gelesen wird, daß der A/D-Wandler 90 die Positionsfehlersignale in digitale Logiksignale umwandelt, die die von sowohl dem Quadraturfeld als auch dem Normalfeld gelesene Positionsinformation darstellen, und daß die digitalen Logiksignale kombiniert werden, um ein Verbund-Positionsfehlersignal zu bilden, das die sowohl von dem Quadraturfeld als auch dem Normalfeld gelesene Positionsinformation darstellt, wobei der Schritt des Kombinierens nach der Umwandlung der Positionsfehlersignale in digitale Logiksignale durchgeführt wird.

**5.** System nach einem der Ansprüche 1 - 4, dadurch gekennzeichnet, daß die Verstärkereinrichtung (34) mit dem Wandler (14) gekoppelte Filtereinrichtungen (32) zur Filtern der Positionsinformationssignale zur Lieferung gefilterter Signale und automatische Verstärkungsregeleinrichtungen (34) umfaßt, die mit den Filtereinrichtungen (32), den Steuereinrichtungen (24) und den Gleichrichtereinrichtungen (70) gekoppelt sind, um die Verstärkung der gefilterten Signale zu ändern.

**6.** System nach einem der Ansprüche 1 - 5,
dadurch gekennzeichnet, daß die Gleichrichtereinrichtungen weiterhin digitale Oszillatoreinrichtungen (80), die selektiv mit den Verstärkereinrichtungen (34) gekoppelt sind, um ein digitales Oszillatorsignal zu liefern, das 90° außer Phase mit den verstärkten Positionssignalen schwingt, und Multipliziereinrichtungen (70) umfaßt, die selektiv mit den Verstärkereinrichtungen (34) gekoppelt sind, um die verstärkten Positionssignale mit dem digitalen Oszillatorsignal zu multiplizieren, um die gleichgerichteten Positionssignale zu liefern.

**7.** System nach Anspruch 6,
dadurch gekennzeichnet, daß die digitale Oszillatoreinrichtung (80) weiterhin eine phasenstarre Schleife (120) zum Aufrasten auf ein Signal, das um 90° gegenüber den verstärkten Positionssignalen verschoben ist, umfaßt.

**8.** Verfahren zur Demodulation von Positionsinformationssignalen, die von einem Wandler (14) in Abhängigkeit von von einer Platte in einem Datenspeichersystem (10) gelesenen Positionsinformationen geliefert wird, wobei das Verfahren die Verstärkung der Positionsinformationssignale zur Lieferung von verstärkten Positionssignalen, die Gleichrichtung der verstärkten Positionssignale zur Lieferung gleichgerichteter Positionssignale, die Schaffung von Integrationseinrichtungen (84) zur Integration der gleichgerichteten Positionssignale zur Erzeugung von Positionsfehlersignalen, die Schaffung eines Analog-/Digital- (A/D-) Wandlers (90) zur Umwandlung der Positionsfehlersignale in logische Ausgangssignale, die die Positionsfehlersignale darstellen, und die selektive Kopplung einer Nullabgleicheinrichtung (10) mit den Integrationseinrichtungen (84) umfaßt, um den Integrationseinrichtungen ein Bezugssignal zur Initialisierung der Integrationseinrichtungen zu liefern, dadurch gekennzeichnet, daß der A/D-Wandler (90) im Zeitmultiplexbetrieb zwischen der Verwendung bei der Steuerung der Nullabgleicheinrichtungen (110) zur Initialisierung der Integrationseinrichtungen (84) und der Umwandlung der Positionsfehlersignale in logische Ausgangssignale betrieben wird.

**9.** Verfahren nach Anspruch 8,
dadurch gekennzeichnet, daß die von der Platte gelesene Positionsinformation von einem Quadraturfeld (PES2) und einem Normalfeld (PES1) gelesen wird, daß der A/D-Wandler (90) die Positionsfehlersignale auf digitale Logiksignale umwandelt, die die Positionsinformation von sowohl dem Quadraturfeld als auch dem Normalfeld darstellen, und daß die digitalen Logiksignale kombiniert werden, um ein zusammengesetztes Positionsfehlersignal zu bilden, das die Positionsinformation darstellt, die sowohl von dem Quadraturfeld als auch dem Normalfeld gelesen wurde, wobei der Schritt der Kombination nach der Umwandlung der Positionsfehlersignale in die digitalen Logiksignale durchgeführt wird.

## Revendications

**1.** Système de démodulation (8) pour démoduler les signaux d'informations de position délivrés par un transducteur (14) en réponse aux informations de position lues à partir d'un disque dans un système de mémorisation de données (10), le système comprenant : des moyens formant amplificateur (34), couplés au transducteur (24), pour amplifier les signaux d'informations de position afin de fournir des signaux de position amplifiés ; des moyens formant redresseur (70), couplés aux moyens formant amplificateur (34), pour redresser les signaux de position amplifiés afin de fournir des signaux de position redressés ; des premiers moyens d'intégration (84), couplés de manière sélective aux moyens formant redresseur (70), pour intégrer les signaux de position redressés afin de produire des signaux d'erreur de position ; un convertisseur analogique-numérique (A/N) (90), couplé aux premiers moyens d'intégration (84), pour convertir les signaux d'erreur de position en signaux de sortie logiques représentatifs des signaux d'erreur de position ; et des moyens d'annulation (110), couplés de manière sélective aux premiers moyens d'intégration (84), pour délivrer, aux premiers moyens d'intégration, un signal de référence afin d'initialiser les premiers moyens d'intégration (84) ; caractérisé en ce que le convertisseur analogique-numérique (90) est multiplexé dans le temps entre l'utilisation pour commander les moyens d'annulation (110) afin d'initialiser les premiers moyens d'intégration (84) et l'utilisation pour convertir les signaux d'erreur de position en signaux de sortie logiques.

**2.** Système selon la revendication 1, caractérisé en ce que les moyens d'annulation (110) comprennent, de plus : des moyens de mémorisation d'informations nulles (112), couplés à un bit du convertisseur analogique-numérique (90), pour mémoriser le niveau logique du bit ; des seconds moyens d'intégration (114), couplés aux moyens de mémorisation d'informations nulles (116) et couplés, de manière sélective, aux premiers moyens d'intégration (84), pour délivrer, de manière sélective, le signal de référence aux premiers moyens d'intégration, le signal de référence étant déterminé sur la base de la valeur numérique mémorisée dans les moyens de mémorisation d'informations nulles (110) ; et des moyens de rétroaction, couplés aux premiers moyens d'intégration (84) et au convertisseur analogique-numérique (90), pour délivrer la tension aux bornes des premiers moyens d'intégration (84) de retour au convertisseur analogiquenumérique (90) pour comparaison avec un signal de référence représentant l'erreur de position nulle, la comparaison déterminant le niveau logique du bit du convertisseur analogique-numérique mémorisé dans les moyens de mémorisation d'informations nulles.

3. Système selon la revendication 1 ou 2, caractérisé en ce qu'il comprend des moyens de mémorisation (94, 96), couplés au convertisseur analogique-numérique (90), pour mémoriser les informations logiques représentatives des signaux de sortie logiques ; et des moyens formant générateur composite (98, 100, 102, 104, 106, 108), couplés aux moyens de mémorisation, pour combiner les informations logiques afin de former un signal d'erreur de position composite représentatif des informations de position lues à partir du disque.

4. Système selon la revendication 1, 2 ou 3, caractérisé en ce que les informations de position lues à partir du disque sont lues à partir d'un champ en quadrature (PES2) et d'un champ normal (PES1), le convertisseur analogique-numérique (90) convertit les signaux d'erreur de position en signaux logiques numériques représentatifs des informations de position lues à partir du champ en quadrature et du champ normal, et les signaux logiques numériques sont combinés pour former un signal d'erreur de position composite représentatif des informations de position lues à partir du champ en quadrature et du champ normal, dans lequel l'étape consistant à combiner est exécutée après avoir converti les signaux d'erreur de position en signaux logiques numériques.

5. Système selon l'une quelconque des revendications 1 à 4, caractérisé en ce que les moyens formant amplificateur (34) comprennent : des moyens formant filtre (32), couplés au transducteur (14), pour filtrer les signaux d'informations de position afin de fournir des signaux filtrés ; et des moyens de commande automatique de gain (34), couplés aux moyens formant filtre (32), aux moyens formant contrôleur (24) et aux moyens formant redresseur (70), pour faire varier l'amplification des signaux filtrés.

6. Système selon l'une quelconque des revendications 1 à 5, caractérisé en ce que les moyens formant redresseur comprennent, de plus : des moyens formant oscillateur numérique (80), couplés de manière sélective aux moyens formant amplificateur (34), pour fournir un signal d'oscillateur numérique oscillant déphasé de 90° par rapport aux signaux de position amplifiés ; et des moyens formant multiplicateur (70), couplés de manière sélective aux moyens formant amplificateur (34), pour multiplier les signaux de position amplifiés par le signal d'oscillateur numérique afin de fournir les signaux de position redressés.

7. Système selon la revendication 6, caractérisé en ce que les moyens formant oscillateur numérique (80) comprennent, de plus : une boucle d'oscillateur verrouillée en phase (120) pour se verrouiller sur un signal déphasé de 90° par rapport aux signaux de position amplifiés.

8. Procédé pour démoduler les signaux d'informations de position délivrés par un transducteur (14) en réponse aux informations de position lues à partir d'un disque dans un système de mémorisation de données (10), le procédé comprenant : l'amplification des signaux d'informations de position afin de fournir des signaux de position amplifiés ; le redressement des signaux de position amplifiés afin de fournir des signaux de position redressés ; la prévision de moyens d'intégration (84) pour intégrer les signaux de position redressés afin de produire des signaux d'erreur de position ; la prévision d'un convertisseur analogique-numérique (A/N) (90) pour convertir les signaux d'erreur de position en signaux de sortie logiques représentatifs des signaux d'erreur de position ; et le couplage, de manière sélective, des moyens d'annulation (110) aux moyens d'intégration (84) pour délivrer, aux moyens d'intégration, un signal de référence afin d'initialiser les moyens d'intégration ; caractérisé en ce que le convertisseur analogique-numérique (90) est multiplexé dans le temps entre l'utilisation pour commander les moyens d'annulation (110) afin d'initialiser les moyens d'intégration (84) et l'utilisation pour convertir les signaux d'erreur de position en signaux de sortie logiques.

9. Procédé selon la revendication 8, caractérisé en ce que les informations de position lues à partir du disque sont lues à partir d'un champ en quadrature (PES2) et d'un champ normal (PES1), le convertisseur analogique-numérique (90) convertit les signaux d'erreur de position en signaux logiques numériques représentatifs des informations de position provenant du champ en quadrature et du champ normal, et les signaux logiques numériques sont combinés pour former un signal d'erreur de position composite représentatif des informations de position lues à partir du champ en quadrature et du champ normal, dans lequel l'étape consistant à combiner est exécutée après avoir converti les signaux d'erreur de position en signaux logiques numériques.

Fig.1

16

Fig. 2

outer radius

Customer Data or An Extended AGC/PLO Synch FIELD

←— servo sector —→←— servo sector —→

inner radius

Fig. 3A

outer radius

Track A

Track B

Track C

inner radius

PLO/AGC SYNCH →|←TRACK ID →|←PES2A→|←— PESI —→|←PES2B→|←INDEX

Fig. 3B

EP 0 420 440 B1

17

Position 1
Position 2
Position 3
Position 4
Position 5

outer radius

inner radius

PES2B

PES2B

PESI

Track ID Field

PLO/AGC Synch

*Fig. 4A*

Outer Radius

14

1
2
3
4
5

Inner Radius

PLO/AGC Synch | TRACK ID | PES 2A | PESI | PES2B

A

B

C

*Fig. 4B*

EP 0 420 440 B1

Fig.5

Fig. 6A

Fig. 6B

$\mathcal{Fig.7}$

Fig. 8

Fig. 9A

Outer Radius

Inner Radius

Fig. 9B

PLO/AGC SYNCH → | TRACK ID | → PES2A ← | ← PES1 → | ← PES2B →

EP 0 420 440 B1

Fig. 10

Fig. 11

**Fig. 12A**

**Fig. 12B**

-Total Position Word-

| Binary Track ID | Composite PES |

00 00 00 00 000000 00 00 00

Servo Track Band

MSB                    LSB

16

Fig. 13A

EP 0 420 440 B1

*Fig. 13B*

TRUTH TABLE

| Case | PES 1 Sign Bit | PES 2 Sign Bit | Raw TRK ID LSB | Corrected TRK ID LSB | Correction Number Base 10 | Correction Number 2's Complement |
|------|------|------|------|------|------|------|
| 0 | 0 | 0 | 0 | 0 | 0 | 00000000000 |
| 1 | 0 | 0 | 1 | 0 | -1 | 11111111111 |
| 2 | 0 | 1 | 0 | 1 | +1 | 00000000001 |
| 3 | 0 | 1 | 1 | 1 | 0 | 00000000000 |
| 4 | 1 | 0 | 0 | 0 | 0 | 00000000000 |
| 5 | 1 | 0 | 1 | 0 | +1 | 00000000001 |
| 6 | 1 | 1 | 0 | 1 | -1 | 11111111111 |
| 7 | 1 | 1 | 1 | 1 | 0 | 00000000000 |

*Fig. 13.C*

*Fig. 13D*

*Fig. 13E*

*Fig. 14A*

*Fig. 14B*

*Fig. 14C*

PLO/AGC SYNCH | TRACK ID | PES2A | PESI | PES2B

Fig. 15A

Fig. 15B

Fig. 15C

*Fig. 16A*

*Fig. 16B*

*Fig. 16C*

Fig. 17

Fig. 18

staggerred servo
sectors for
lower disks

5,4,3,2,1

data sector
for disk 0

servo sector

EP 0 420 440 B1